# EUROPEAN PATENT APPLICATION

(11) **EP 3 730 920 A1**
(43) Date of publication of application: **28.10.2020**
(21) Application number: 20171642.0
(22) Date of filing: 27.04.2020
(51) Int. Cl.: G01M 13/02, F16H 55/36

(54) **DAMPER-LIMITER PULLEY TESTING MACHINE**

(30) Priority: 26.04.2019 EP 19171376
(71) Applicant: Nissens Automotive A/S, 8700 Horsens (DK)
(72) Inventor: BÔNSCH, Udo, 8700 Horsens (DK)
(74) Representative: Dragsted Partners A/S

(57) **Abstract**

The present invention relates to an automotive air-conditioning damper-limiter pulley testing machine (1). The testing machine is for testing of the pulley endurance, in particular the damper and the limiter without connection to an air-conditioning system.

## Description

The present invention relates to an automotive air-conditioning damper-limiter pulley testing machine.

For some years, so-called clutchless, externally triggered, variable compressors have been used in the automotive industry. All well-known compressor manufacturers use a great variety of different basic types. "Externally triggered" means that the stroke volume of the compressor is determined by a built-in control valve that is triggered by the air-conditioning control unit, depending on a wide variety of system parameters such as outside/desired temperature, high/low pressure, rotational speed and engine load. "Clutchless" means that the pulley of the compressor no longer has a clutch. This means that the compressor is permanently driven via the pulley and works even if the air-conditioning system is switched off. If the cooling or air-conditioning of the cabin of the car is off, the output of the compressor is regulated to practically zero or a few percent, but the pulley is still rotating with the same speed as if it was working at maximal output.

The damper-limiter pulley unit of the compressor consists, for example, of a drive plate and the actual circular pulley. The drive plate typically consists of a rubber element and metal connections which in combination form the connection between the pulley and the compressor shaft. The rubber element, called the damper, acts as a vibration damper, but also contribution to protecting the compressor or the other driven units from overload or damage. Furthermore, as a further protection the drive plate of the pulley comprises metal connections between the outer part of the pulley and the axle of the compressor. The metal connections, in general called a limiter, break if the compressor locks up. When the compressor locks up, the pulley is fully braked and hence stopped from rotation. Fully braked is braked to a to a full stop. This situation may be highly hazardous for both the engine of the vehicle and for the safety of the persons in the vehicle. This is due to the fact that the belt driving the compressor pulley is driving other crucial parts of the engine and the car as well, e.g. the servo-assisted steering, the cooling unit and the water pump. If the pulley of the compressor is fully stopped while the engine is still running, the belt will start to slide on the compressor pulley, and within a short time the belt will break due to excessive heat generation caused by the friction between the braked pulley and the belt. The belt may also catch fire, causing a risk of fire in the engine compartment.

Hence, in case the pulley of the compressor is restricted from running freely, i.e. rotating in the same pace as the belt, it is necessary that the limiter safety feature causes the pulley to run freely, i.e. prevents it from rotating at a lower pace or ensures that it is braked to a full stop before it causes the belt to break. Thus, the purpose of the limiter is to let the pulley break loose from the axle of the compressor at a certain threshold value of torque. When the limiter is broken, the pulley may run freely, i.e. without any risk of damaging the belt. Thus, a broken compressor, e.g. a locked compressor, will not affect the driving of the vehicle or affect the engine in a hazardous way.

Various situations may occur that could affect the damper-limiter pulley, e.g.:
- Liquid lock of the compressor,
- malfunctions in the compressor itself, e.g. friction,
- vacuum lock of the compressor,
- excessive force on the pulley, i.e. too much engine torque, e.g. from a chip-tuned car,
- excessive negative force on the pulley, e.g. when the engine is stopped and turns slightly in the negative direction - this situation has become more frequent due to the start/stop functions of cars,
- excessive drive belt movement, or
- rotation speed fluctuation.

All of the above situations may lead to the breaking of the limiter, and at least to a changed load on the damper of the pulley. Having listed the above, it is important to further note that all the situations may act together and hence have a negative combined impact.

However, in case the limiter is activated too early, e.g. when the compressor is just working hard, it would cause an unnecessary need for replacement of the pulley and an inconvenience and discomfort for the owner and/or driver of the car. Hence, the car owner is in fact having the car repaired based on a situation that seems to be a serious fault, but in fact relates to poor quality. Furthermore, from an environmental perspective the use of a spare part that should in fact not have been used at all has a negative environmental impact.

It is an object of the present invention to wholly or partly overcome the above disadvantages and drawbacks of the prior art. More specifically, it is an object to provide an improved testing machine capable of testing the limiter and finding the correct properties of a given damper-limiter pulley.

The above objects, together with numerous other objects, advantages and features which will become evident from the below description, are accomplished by a solution in accordance with the present invention by way of an automotive air-conditioning damper-limiter pulley testing machine for testing of the damper-limiter pulley endurance without connection to an air-conditioning system, wherein the damper-limiter pulley testing machine comprises:
- a fixation means for fixating the pulley,
- a torque generation means for applying a torque load to the pulley,
- a measuring means for measuring the load on the pulley, and
- a controlling means for controlling the load applied by the torque generation means.

In this way, it is achieved that the load applied to the damper-limiter pulley from the torque generation means may correspond to the load from the engine of a car. In particular, the loads applied to the pulley may precisely simulate the loads from each stroke of the engine of the car. In this way, not only the capability of the limiter when breaking is calculated, but the effect of altering loads is also found. Thus, it is possible to test one or more pulleys in controlled and/or simulated conditions and thereby reduce the risk that a pulley or parts of the pulley will fail during normal operations in real life-conditions, consequently reducing the risk of damaging a part of an engine. This also means that it may be possible to test the limits of how much torque can be applied to a specific type of pulley before it breaks or is torn apart, and/or a real life test on where the weak points may be on a specific type of pulley.

In a further embodiment, the torque generation means may be driven by electricity. In this way, it is possible to control the torque generation means in a wide variety of ways. It is possible to test pulleys with or without a damper and vice versa to test pulleys with or without a limiter. This is due to the fact that the testing machine is highly controllable, and therefore the machine will not break if the pulley does not act as expected. The measuring means facilitates testing of the torsional spring rate of a/the? damping element in the pulley.

In a further embodiment, the torque generation means may be a torque motor. A torque motor is not just a stepper motor or an electrical motor as such; it is indeed a highly specialised motor capable of delivering precision torque at all rotational (angular) positions, even without actually rotating. When a torque motor is stalled, i.e. where there is no rotation, the motor may apply a steady torque to the load, i.e. provide static force. By using a torque motor, it is possible to subject the pulley to the load needed. The torque motor is capable of delivering torque in a particular well-controlled manner. The torque motor facilitates a highly dynamic behaviour and provides a test frequency, i.e. the alteration of load from the torque generation means, of 1Hz to 10Hz. The alteration of load from the torque motor may be up to nearly 1000Hz, i.e. the load from the torque motor may be changed up to nearly 1000 times/second. In this way, it is possible to apply highly altering loads to the pulley to be tested and thereby apply altering loads similar to those of e.g. a combustion engine. The combination of a torque motor and the measuring means facilitates testing of the resistance torque of a damper at a defined load. In a similar manner, it is possible to test the degree of rotation, i.e. the play of a damper at a defined torque. In this way, it is possible to test the durability of the damper as a whole. In other words, it is possible to test the durability of both the damper and the limiter by testing the resistance torque over time in a controlled manner.

In a further embodiment, the pulley testing machine may comprise an adaptor mounted between the fixation means and the torque generation means. In this way, it is possible to test a large variety of pulleys on their actual axle as installed in e.g. the vehicle instead of having to modify the axle of the pulley. Any modification of the axle or the pulley may lead to a less precise test.

In a further embodiment, the testing machine may comprise a base, which may be in the form of a base table. In this way, it is possible to use the testing machine as a stand-alone testing machine. The base table may be made of steel having a thickness of 2 mm to 15 mm, or 3 mm to 15, or 4 mm to 10 mm.

Within the understanding of the present disclosure, the term "table" may mean a table or a tabletop, where the tabletop has one or more supports to hold the tabletop at a distance from the surface on which the table stands. The terms "base table" and "tabletop" may be synonymous or interchangeable in the present disclosure.

In a further embodiment, the base table may comprise recesses for positioning the fixation means and the torque generation means coaxially in relation to each other. This may mean that the rotational axis of the fixation means and the rotational axis of the torque generation means are arranged to rotate around a common axis, where the fixation means and/or the torque generation means may be arranged at different longitudinal positions of the same axis. Thus, when the fixation means holds a pulley, the rotational axis of the pulley may be coaxial with the rotational axis of the fixation means and the rotational axis of the torque generation means, which are both coaxial with a common axis, where the fixation means and/or the pulley may be positioned at a first longitudinal position and/or the torque generation means may be arranged at a second longitudinal position of the same axis. Even though the term "rotational axis" is used, it is not necessary actually to rotate the damper-limiter pulley around this axis. This means that the rotational axis is an imaginary axis positioned at a central point, similar to the centre of a circle.

In a further embodiment, the torque generation means may be mounted to a measuring plate connected to the base table and/or a part fixed relative to the torque generation means. In this way, it is possible to measure the output torque from/load applied by the torque generation means externally. In this way the applied torque may thus be directly measured as opposed to indirectly derived by the energy input to the torque generation means.

In a further embodiment, the measuring plate may comprise an arm projecting from the outer edge of the measuring plate. In this way, it is possible to keep the measuring plate in a certain position where it is easily to adjustable and accessible. Furthermore, due to the length of the arm, the measuring instruments, e.g. a load cell, may be of a less sensitive and hence less expensive type. With a long arm projecting from the outer edge of the measuring plate, the movement in the load cell is larger, and the measuring resolution of the load cell may be lower.

In a further embodiment, the arm of the measuring plate may be attached to the base table of the testing machine via one or more adjustable connections. In this way, it is possible to adjust the position of the arm. Furthermore, it is possible to adjust the connections in order to adapt the testing capabilities of the damper-limiter pulley testing machine.

In a further embodiment, the one or more rods may be a connection/connections where the rod(s) or the connection(s) may comprise a load measuring means such as a load cell. In this way, it is possible to measure the exact load applied to the pulley. If an electrical motor is used, it is possible to read out the load or torque from the electrical consumption of the motor. However, this readout is not always accurate since the motor may have both constant and dynamic losses that are difficult to take into account, e.g. if they change over time or are dependent on the load or the position of the torque generation means.

In a further embodiment, the testing machine may further comprise at least one ventilator for generating an airflow around the torque generation means. In this way, it is achieved that the torque generation means may be kept at a low temperature. In case the torque generation means does not rotate, it is not possible to attach a fan or the like to the centre axle of the torque generation means as this will not be turning.

In a further embodiment, the torque generation means may have a load span, i.e. a torque generation means of at least 1: 10, e.g. ranging from 5 Nm to at least 50 Nm. In this way, it is possible to simulate the full span of load peaks of e.g. a combustion engine during its full rotation. The range 5Nm to at least 50 Nm is just an example the to underline the 1:10 ration between the base load and the peak load. This the maximal capabilities of the torque generation means may be 500Nm or more.

In a further embodiment, the fixation means may be adjustable to hold a pulley having a diameter from 10 mm to 500 mm, more preferred 20 mm to 400 mm, and most preferred 30 mm to 300 mm. In this way, it is possible to test a large variety of pulleys without the need for changing the fixation means. In this way time is saved for adapting the testing machine.

In a further embodiment, the fixation means may comprise at least three gripping arms. In this way, it is possible to firmly hold and centre the pulley to be tested in the fixation means in one action.

In a further embodiment, the torque generation means may be adapted to apply a predetermined torque in at least one direction of rotation.

In a further embodiment, the torque generation means may apply a different torque in a positive and negative direction of rotation. In this way, it is possible to simulate the ordinary operation of an engine and furthermore simulate e.g. the engine of a car stopping, resulting in a sudden negative rotation of the pulley.

In a further embodiment, the torque generation means may apply torque independently of the degree of rotation. This means that the torque may be applied without any rotation of the rotation generation means or with a slight rotation due to tolerances or play in the damper-limiter pulley.

In a further embodiment, the torque generation means can change from 10% to 80% of its maximal torque in 0.005 sec. to 1 sec., more preferred 0.0075 sec. to 0.75 sec., and most preferred 0.01sec. to 0.75 sec. This means that the torque generation means may vary its torque output quickly. This implies both increasing the load as well as decreasing the load from the torque generation means. In this way, it is possible to change the load at the same pace as e.g. in a combustion engine. In a combustion engine, the force applied to the axles of the engine is typically all driven by the combustion in the engine. In other words they may entirely be driven by the combustion in the engine. Hence, the time of the actual explosion/combustion as well as the position of the piston rod in the cylinder momentarily create an increase in the load on the axles, i.e. an increase in the torque. This increase occurs several times during one rotation, depending on the number of cylinders connected to the axle. At 4000 rpm, a four-cylinder engine would typically have two ignitions, i.e. fuel explosions for every 360-degree rotation. Hence, in this example, due to the ignitions/explosions alone, the torque generation means may thus be able to apply a change in load of approx. 67 times per second ((4000 rpm/60 min) ^{∗} 2 explosions). These changes in load are applied on top of a base load due to the mere fact that the engine is running. In other words, the torque generation means supplies a base load, and then in the above example it applies an additional peak load 67 times/second in addition to the base load. It is to be understood that a different number of cylinders and the specific firing order of the engine would may led to a higher number of ignitions during an engine cycle of the internal combustion engine.

In an embodiment the torque generation means has a load span for peak loads added to the base load of at least 1:10. This means that the torque generation means should be able to generate a peak load 10 times higher than the base load. As an example, if the base load is 5 Nm a sudden the torque generation means should be capable of generating a sudden peak load of 50 Nm in order to simulate e.g. the ignition of the fuel in a cylinder of a combustion engine.

In one embodiment, the additional peak load may be a slight increase or decrease in the applied torque, which may increase or decrease the load applied to the pulley in the form of a vibration having a predefined and/or an adjustable frequency. The vibration may be applied to the torque generator in the form of a discrete vibration input, or in the form of a modified electrical signal that provides the torque to the torque generator.

In a further embodiment, the torque generation means may apply a predetermined torque independently over a specific degree of rotation. In this way, it is possible to further simulate the rotation of an engine, including the variation in the torque during a full rotation. In other words, due to the variations during a rotation of a combustion engine, it must be possible for the torque generation means to simulate all the load changes during a single rotation.

In a further embodiment, the torque generation means may have a uniform load span during a full rotation of the torque generation means. In this way, it is possible to start a test cycle from any position of the torque generation means, i.e. no specific rotational positioning is necessary.

In a further embodiment, it may be possible to control the torque of the torque generation means at any speed up to 1000 rpm. In a further/another? embodiment, it may be sped up to 10000 rpm. The "speed" is the rotational speed of the damper-limiter pulley when it is mounted in its real-life use, e.g. connected to a compressor of an AC system driven by an internal combustion system. This means that it is possible to apply loads from the torque generation means simulating a rotational speed of e.g. a combustion engine rotating 10000 rpm. In this way, the testing machine may also be used for testing pulley clutches of e.g. a vehicle air-conditioning system.

In a further embodiment, the fixation means may be capable of receiving and fixating pulleys of diameters from 30 mm to 500 mm, more preferred 50 mm to 400 mm, even more preferred 70 mm to 300 mm, and most preferred 90 mm to 200 mm. In this way, it is achieved that the fixation means and hence the damper-limiter pulley testing machine as a whole are flexible and capable of testing a wide variety of pulleys.

In a further embodiment, the fixation means may comprise slidably arranged fixation arms. In this way, it is easy to adapt the fixation means from one diameter of the pulley to another.

The present invention also refers to the use of a damper-limiter pulley testing machine for testing the capabilities in relation to failure of a pulley used in combination with a combustion engine. Using the damper-limiter testing machine according to the invention for this purpose provides an accurate simulation of the loads applied to the damper-limiter pulley from a combustion engine.

In a further embodiment, the use of a damper-limiter pulley testing machine according to the invention may be used for testing the capabilities in relation to failure of a damper-limiter pulley for an AC compressor driven by an internal combustion engine. In this way, it is possible to apply altering loads similar to those of a combustion engine in an accurate manner. Furthermore, the testing is safe for the staff handling the damper-limiter pulley testing machine because there are no rotating parts.

Within the context of the present invention, the term "fixation means" may mean any device that is capable of fixating the pulley. The pulley may be fixated relative to its surroundings, such as a base, a base table and/or a tabletop. The fixation may be one or more fixation arms, fixation brackets or other types of mechanical devices that are capable of maintaining a fixed position of a fixation device.

Within the understanding of the present invention, the term "torque generation means" may mean a torque generator or a device that is capable of producing and/or generating a predefined amount of torque. The torque may be applied with or without a rotational movement, i.e. as a static and/or a kinetic force.

Within the understanding of the present invention, the term "measuring means" may be understood as any device that is capable of measuring a load applied to a pulley. This may be in the form of a load sensor, a torque sensor, a torque meter or any device that is capable of transforming torque applied to a pulley to an electrical signal that represents the torque applied to the pulley.

Within the understanding of the present invention, the term "controlling means" may mean a controller for controlling the load applied by a torque generation means. The controller may be an electrical controller that is capable of sending signals to a torque generator in order to control, maintain and/or vary the load applied to the torque generator. The controller may be an analogue and/or a digital controller, which may be connected to a CPU or a computer system in order to provide control input into the controller to enable the controller to provide a control output to the torque generator.

The invention and its many advantages will be described in more detail below with reference to the accompanying schematic drawings, which for the purpose of illustration show some non-limiting embodiments and in which
Fig. 1 shows a perspective view of a DL pulley testing machine according to the invention,
Fig. 2 is an exploded view of the testing machine in Fig. 1 without the cabinet,
Fig. 3 is a partly cross-sectional side view of the assembled testing machine,
Fig. 4A shows an enlarged view of the fixation arm and the measuring means,
Fig. 4B shows a cross-sectional view of the enlarged view of the measuring means,
Fig. 5A shows a front view of an example of a limiter in its functional state,
Fig. 5B shows the limiter of Fig. 5A in broken state,
Fig. 6 shows a perspective view of a limiter seen from the backside,
Fig. 7 shows, in a sectional cut-out view, an example of a damper-limiter pulley capable of being tested in the testing machine according to the invention,
Fig. 8A shows the backside of a damper-limiter pulley,
Fig. 8B shows the dampers of the pulley shown in Fig. 8A,
Fig. 9A shows the backside of a further example of a damper-limiter pulley,
Fig. 9B shows the dampers of the pulley shown in Fig. 9A, and
Figs. 10 and 11 show examples of the limiter of a pulley (no dampers installed).

All the figures are highly schematic and not necessarily to scale, and they show only those parts which are necessary in order to elucidate the invention, other parts being omitted or merely suggested.

### Detailed Description

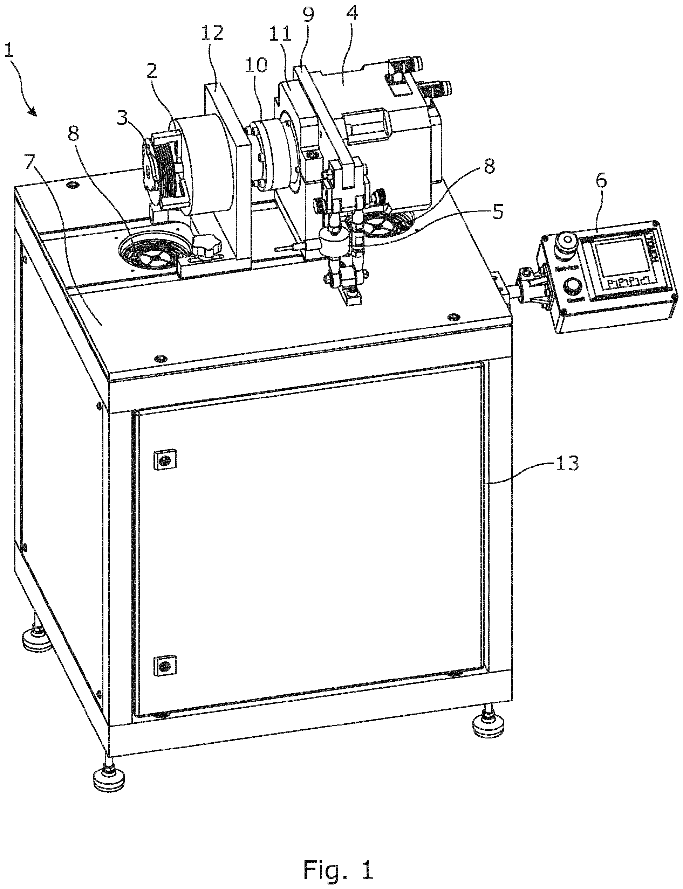

Fig. 1 shows a perspective view of an automotive air-conditioning damper-limiter pulley testing machine 1 according to the invention. This machine may for short be named a "DLP testing machine" or a "testing machine", although referring to the automotive air-conditioning damper-limiter pulley testing machine. The DLP testing machine comprises a fixation means 2 for fixating the pulley 3. The testing machine further comprises a torque generation means 4 for applying a torque load to the pulley 3 and a measuring means 5 for measuring the load on the pulley, and a controlling means 6 for controlling the load applied by torque generation means 4. In this embodiment, the testing machine 1 is arranged on a base table 7 where the base plate comprises two fans 8 for cooling the torque generation means 4 and the damper-limiter pulley 3. A measuring plate 9 is attached to the torque generation means 4, the measuring plate 9 being connected to the measuring means 5 for measuring e.g. the torque applied by the torque generation means 4. An adaptor 10 is arranged between a first positioning plate 11 and a second positioning plate 12. The adaptor 10 serves to connect the torque axle (not visible) of the torque generation means 4 to the pulley 3 via a pulley axle (not visible). The base table 7 is supported by a cabinet 13. In this embodiment, the torque generation means 4 is an electrical motor. More specifically, in this embodiment the torque generation means 4 is a torque motor (no wires are shown). The torque generation means, i.e. the torque motor 4, is capable of generating a precise alternating torque both in terms of direction and in terms of applying peak loads in a ratio of e.g. 1:10 relative to the base load. This means that if a base load of 1 Nm is applied, a sudden increase to 10 Nm may be applied in order to e.g. simulate when the actual explosion happens in a cylinder of a combustion engine. At this exact time, a sudden additional load will be applied to the pulley.

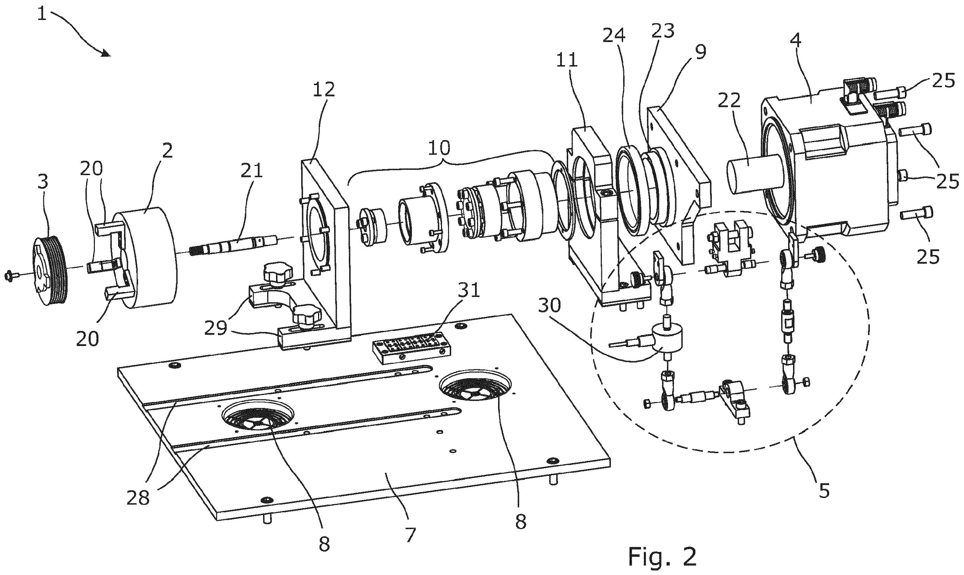

Fig. 2 shows an exploded view of the testing machine 1 from Fig. 1 without the cabinet 13. It is shown that in this embodiment the fixation means 2 comprises three fixation arms 20; however, it would be understood that a different number of arms is also a viable embodiment. The fixation arms 20 are slidably arranged in the fixation means 2, and hence it is possible to adapt the fixation means to different pulley diameters. This may, for example, be pulley diameters ranging from 30 mm to 500 mm.

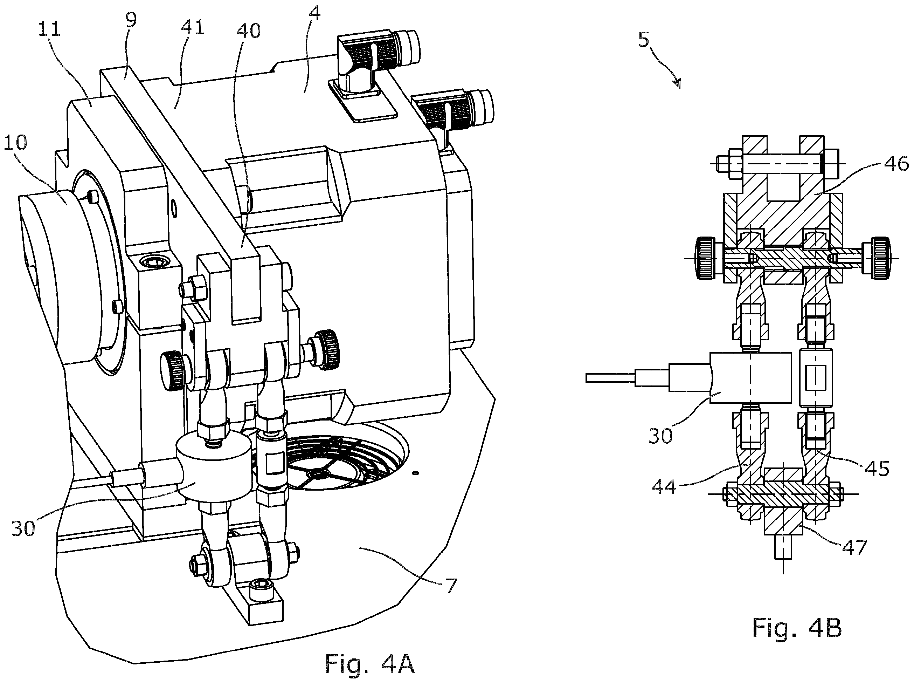

The pulley 3 is connected to a pulley axle 21. The pulley axle 21 is connected to a torque axle 22 via the adaptor 10. The pulley 3 and the torque axle 22 are aligned by the first positioning plate 11 and the second positioning plate 12. It is to be understood that the fixation means 2 itself is affixed to the second positioning plate 12 by bolts, whereas the adaptor 10 and the pulley axle 21 may rotate freely when the fixation arms 20 do not clamp around the pulley 3. It is further to be understood that the measuring plate 9 is in fact rotatably arranged in relation to the first positioning plate 11. The measuring plate 9 comprises an annular projection 23 that in its mounted position projects into a bearing 24 resting in the first positioning plate 11. The measuring plate 9 is fixed in relation to the motor 4 by the screws 25 - in this view, the screws are placed far to the right, but in mounted position (see Fig. 1) the screws are inserted from around the middle of the motor and screwed into the measuring plate 9. In this exploded view of Fig. 1, the two fans 8 arranged in the base table 7 are more visible. The first and second positioning plates 11 and 12 are arranged in two recessed guides 28. The second positioning plate 12 comprises sliding guides 29. The second positioning plate 12 may be slid back and forth during changing of pulley axle 21. Indicated by a dotted circle, the measuring means 5 is seen in an exploded view as well. The measuring means 5 comprises a number of connectors (shown in detail in Figs. 4A and 4B) and a load sensor 30. The load sensor may be a load cell 30. Attached to the base table, an interface 31 is shown. The interface connects the motor 4 and the load cell 30 to the plc/controlling means (not shown).

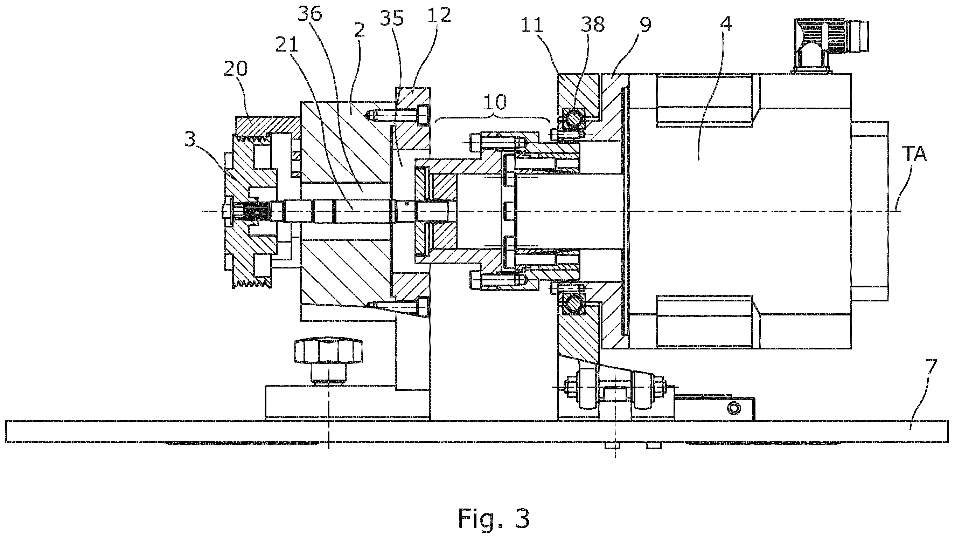

Fig. 3 shows, in a partially cross-sectional view, the testing machine 1 shown in Fig. 2 in an assembled state, i.e. the testing machine as shown in Fig. 1, but without the cabinet 13. It is seen that the pulley axle 21 is arranged to rotate freely in the plate opening 35 of the second positioning plate 12 as well as in the centre hole 36 of the fixation means 2. However, it is to be understood that during testing the pulley axle 2 in fact does not rotate due to the fixation arms 20 (only one shown in this partial cross-sectional view). Furthermore, it is shown that the measuring plate 9 is held in a positioning hole of the first positioning plate 11. In this way, the measuring plate 9 and the first positioning plate 11 rotate freely in relation to each other via the bearing 38. Since the motor 4 is attached to the measuring plate 9, the motor 4 may rotate freely in relation to the first positioning plate 11. It is shown that the torque axis TA is in the centre of both the torque axle 22 (see Fig. 2) of the motor 4 and the pulley axle 21, and hence also in the centre of the adaptor 10.

Figs. 4A and 4B show in more detail the build-up of the measuring means 5. Fig. 4A shows a part view of the testing machine in which it is seen that the measuring means 5 is connected to an arm 40 of the measuring plate 9. It should still be remembered that the measuring plate 9, and thus also the motor 4 and the first positioning plate 11, may rotate freely in relation to each other. Therefore, when torque is applied to the pulley (not shown) from the motor 4 via the adaptor 10 and the pulley is fixated, the adaptor cannot rotate. Hence, the housing of the motor 41 will try to rotate instead, but the motor housing 41 is connected to the measuring plate 9, and the arm 40 transfers the torque from the motor 4 to the measuring means 5 and thus to the load cell 30. The measuring means 5 connects the arm 40 of the measuring plate 9 and the base table 7, and as the load cell 30 is positioned in this line, the load cell 30 will, in an external way measure the torque applied from the motor 4. The external way is as opposed to just measuring the input to the torque generation means and thereby deriving the load. It will be understood that the specific length of the arm 40 from the torque axis TA (see Fig. 3) and the build-up of the measuring means 5 should be adapted in order to get the measurements needed.

Fig. 4B shows a cross-sectional view of the measuring means 5. The measuring means 5 comprises a load sensor 30. In this embodiment, the measuring means 5 comprises a first measuring connection 44 and a second measuring connection 45. The first and second measuring connections 44, 45 are attached to a first common connection 46 and a second common connection 47. The first common connection 46 connects the measuring means 5 to the measuring arm 40, and the second common connection 47 connects the measuring means 5 to the base table 7 (see Fig. 4A). In this build-up of the measuring means 5, it is possible to adjust the measuring means 5 in various ways and thereby adjust the measuring to the exact conditions, e.g. change the load cell 30 to a different capability.

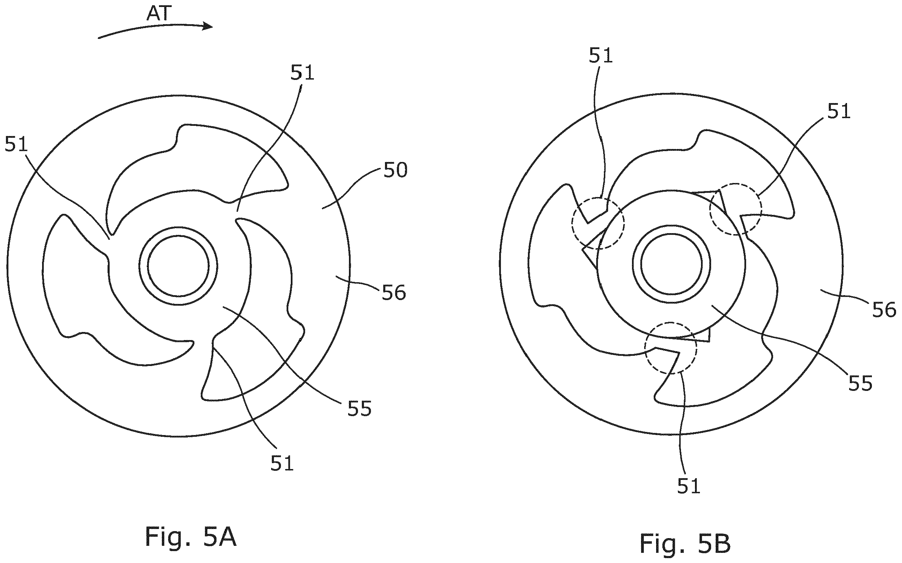

Fig. 5A shows a simplified embodiment of a limiter 50 of a pulley 3. In this embodiment of the limiter, there are three limiter points 51, but it will be understood that a limiter may have various forms still providing the same capability, i.e. the limiter will break if the load is too strong/high and exceeds the threshold value of the load specified for the limiter as a whole. It is further to be understood that limiters may be separate parts connecting an outer part of the pulley to the inner axle part. As mentioned previously, the limiter serves to avoid any hazards in respect of the belt, the engine or the compressor if a malfunction blocks the rotation of the pulley. When a load is applied to the outer periphery of the limiter (typically also the outer periphery of the pulley) in the direction of the arrow AT, it is seen that, in this unbroken situation, an inner part 55 of the limiter will rotate at the same speed as an outer part 56 of the limiter, i.e. rotate as one part as intended.

Fig. 5B shows the limiter of Fig. 5A in a broken state. It is shown that the limiter points 51 are broken, and the inner part 55 can run freely in relation to the outer part 56. It is to be understood that the present figure is simple, only showing the limiter itself. The breaking of the limiter may be caused by a number of situations, such as
- Liquid lock of the compressor,
- malfunctions in the compressor itself, e.g. friction,
- vacuum lock of the compressor,
- excessive force on the pulley, i.e. too much engine torque, e.g. from a chip-tuned car,
- excessive negative force on the pulley, e.g. when the engine is stopped and turns slightly in the negative direction - this situation has become more frequent due to the start/stop functions of cars,
- excessive drive belt movement, or
- rotation speed fluctuation.

Any of the above examples may affect either the damper or the limiter 50.

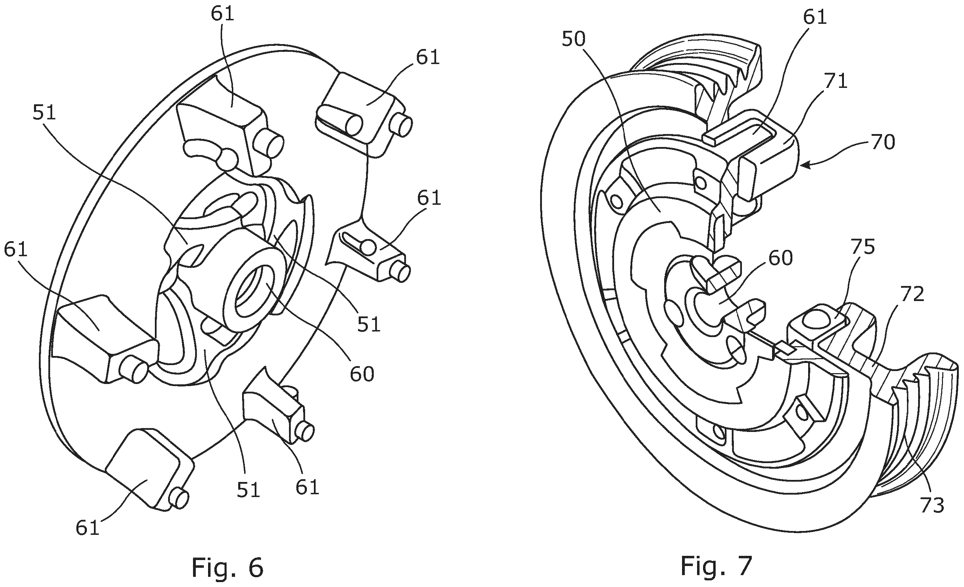

Figs. 6 and 7 show a more detailed view of an embodiment of a damper-limiter pulley 3. Fig. 6 shows the limiter 50 alone. The centre 60 of the limiter is connected to the shaft of the compressor (not shown) - or in the case of testing, the pulley axle 21 (see Fig. 3). In this embodiment, the limiter 50 comprises a number of damper projections 61. Damper projections 61 are arranged to fit with damper units 71 (see Fig. 7). In this embodiment of a limiter 50, the limiter transfers the torque from the pulley axle 21 to the pulley via a damper 70 comprising a number of damper units 71. The outer periphery section 72 of the pulley 3 may be an even surface or, as in this embodiment, have a corrugated surface 73. The outer periphery section 72 comprises an internal positioning surface. Between the internal positioning surface and the body of the compressor (not shown), a bearing 75 is arranged in order to align the pulley 3 correctly. During testing in the testing machine a pulley axle 21 is used (see Fig. 2) and in real life situation i.e. a compressor mounted in a car, it is a compressor shaft are inserted in the centre 60 of the damper-limiter pulley.

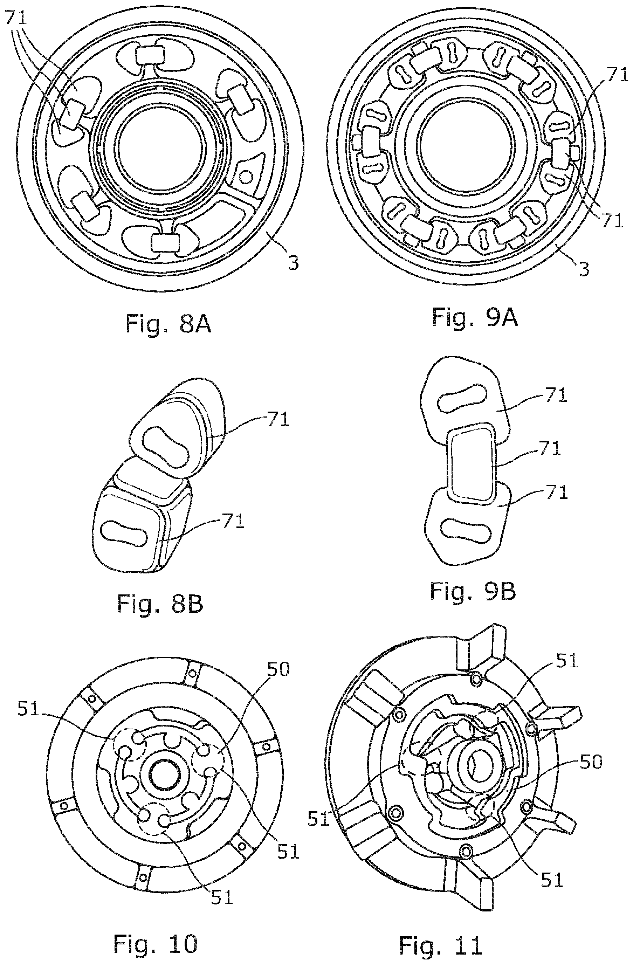

Fig. 8A and Fig. 8B show, for illustrative purposes, an alternative configuration of damper units 71. In this configuration, the damper units 71 are asymmetrical.

Fig. 9A and Fig. 9B show, for illustrative purposes, a further alternative of the damper units 71 design. In this configuration, the damper units 71 are symmetrical. It is obvious to a person skilled in the art that the material of the units may have a great impact on the damping properties of the units. Therefore, it is achieved by the present invention that the damper-limiter pulley testing machine is sufficiently configurable to handle a large variety of different combinations of dampers, limiters and diameters of pulleys.

Fig. 10 and Fig. 11 show that the limiter 50 may also have a very different design, although the capabilities may generally be the same, i.e. to break when an excessive load is applied to the pulley.

Although the invention has been described above in connection with preferred embodiments of the invention, it will be evident to a person skilled in the art that several modifications are conceivable without departing from the invention as defined by the following claims.

## Claims

1. Automotive air-conditioning damper-limiter pulley testing machine (1) for testing of the damper-limiter pulley endurance without connection to an air-conditioning system, **wherein** the damper-limiter pulley testing machine comprises:
- a fixation means for fixating the pulley,
- a torque generation means for applying a torque load to the pulley,
- a measuring means for measuring the load applied to the pulley, and
- a controlling means for controlling the load applied by the torque generation means.

2. Automotive air-conditioning damper-limiter pulley testing machine (1) according to claim 1, wherein the torque generation means is driven by electricity.

3. Automotive air-conditioning damper-limiter pulley testing machine (1) according to claim 1, wherein the torque generation means is a torque motor.

4. Automotive air-conditioning damper-limiter pulley testing machine (1) according to claims 1 to 3, wherein the pulley testing machine comprises an adaptor mounted between the fixation means and the torque generation means.

5. Automotive air-conditioning damper-limiter pulley testing machine (1) according to any of claims 1 to 4, wherein the testing machine comprises a base table.

6. Automotive air-conditioning damper-limiter pulley testing machine (1) according to claim 5, wherein the base table comprises recesses for positioning the fixation means and the torque generation means coaxially in relation to each other.

7. Automotive air-conditioning damper-limiter pulley testing machine (1) according to any of claims 1 to 6, wherein the torque generation means is mounted on a measuring plate connected to the base table and/or a part fixed relatively to the torque generation means.

8. Automotive air-conditioning damper-limiter pulley testing machine (1) according to claim 7, wherein the measuring plate comprises an arm projecting from the outer edge of the measuring plate.

9. Automotive air-conditioning damper-limiter pulley testing machine (1) according to claim 8, wherein the arm of the measuring plate is attached to the base table of the testing machine via one or more adjustable connections.

10. Automotive air-conditioning damper-limiter pulley testing machine (1) according to claim 9, wherein the one or more connections comprise load measuring means such as a load cell.

11. Automotive air-conditioning damper-limiter pulley testing machine (1) according to any of claims 1 to 10, wherein the testing machine further comprises at least one ventilator for generating an airflow around the torque generation means.

12. Automotive air-conditioning damper-limiter pulley testing machine (1) according to any of claims 1 to 11, wherein the torque generation means has a load span for peak loads added to the base load of at least 1:10.

13. Automotive air-conditioning damper-limiter pulley testing machine (1) according to any of claims 1 to 12, wherein the fixation means is adjustable to hold a pulley having a diameter from 10 mm to 500 mm, more preferably 20 mm to 400 mm, and most preferably 30 mm to 300 mm.

14. Automotive air-conditioning damper-limiter pulley testing machine (1) according to any of claims 1 to 13, wherein the fixation means comprises at least three gripping arms.

15. Use of a damper-limiter pulley testing machine according to claims 1 to 14 for testing the capabilities in relation to failure of a damper-limiter pulley for an AC compressor driven by an internal combustion engine.
